(19)

Europäisches
Patentamt
European
Patent Office
Office européen
des brevets

(11) **EP 3 508 549 A1**

## (12) EUROPEAN PATENT APPLICATION
published in accordance with Art. 153(4) EPC

(43) Date of publication:
**10.07.2019 Bulletin 2019/28**

(21) Application number: **17846484.8**

(22) Date of filing: **29.08.2017**

(51) Int Cl.:
*C09K 3/00* [(2006.01)]          *A23L 29/00* [(2016.01)]

(86) International application number:
**PCT/JP2017/030914**

(87) International publication number:
**WO 2018/043479 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.09.2016 JP 2016171213**

(71) Applicant: **Dai-Ichi Kogyo Seiyaku Co., Ltd.
Kyoto-shi, Kyoto 600-8873 (JP)**

(72) Inventors:
• **TAWA Takazumi
kyoto-shi
Kyoto 600-8873 (JP)**
• **HASHIMOTO Masayuki
kyoto-shi
Kyoto 600-8873 (JP)**

(74) Representative: **Enomoto, Kéi et al
Maucher Jenkins
26 Caxton Street
London SW1H 0RJ (GB)**

## (54) FREEZING INHIBITOR

(57)     Provided is a freezing inhibitor which has excellent freezing inhibitory effect and excellent safety, while being able to be mass-produced. According to the present invention a freezing inhibitor which contains water-insoluble fibers that are derived from at least one substance, selected from the group consisting of celluloses, chitins and chitosans is used.

**Description**

TECHNICAL FIELD

The present invention relates to a freezing inhibitor having a function of inhibiting freezing of water, and particularly to a freezing inhibitor containing a non-protein-based substance exhibiting non-freezing activity as an antifreeze protein has.

BACKGROUND ART

Conventionally, freezing inhibitors capable of inhibiting the freezing of the water when the water is equal to or below the freezing point thereof have been widely used in various fields.

Here, freezing inhibition generally refers to the effect that coalescence of ice crystals is inhibited and thermal hysteresis is found in the process of changing the form of ice crystals, and is also called antifreeze activity, ice crystal growth inhibition, or anti-ice nucleation activity. In particular, it is essential that the thermal hysteresis is observed, and the mechanism is different from freezing point depression or ice-deposition reducing effect.

For example, the freezing point depression is a phenomenon generally described by a molar freezing point depression rule in which the freezing point depression temperature is directly proportional to the molar concentration of a solute. For an aqueous solution, which does not contain a substance having a freezing inhibiting effect, when it is supercooled and completely frozen once, and then, the temperature of the system is gradually increased to a temperature at which the frozen solution melts (melting point), and subsequently lowered to slightly below the melting temperature and allowed to stand, the freezing starts and the melting point is the same as the freezing point.

Meanwhile, in a system, which does not contain a substance having a freezing inhibiting effect, through the above operation, the freezing does not start even the temperature is slightly lowered from the melting temperature, and the temperature is further lowered to start the freezing. Here, a difference in temperature is observed between the above melting temperature and the freezing temperature (freezing point), and this phenomenon is generally referred to as thermal hysteresis. In this case, the molar concentration of the substance having the freezing inhibiting effect and the freezing point depression temperature do not show a direct proportional relationship. In the system, which contains a substance having such a freezing inhibiting effect, the crystal growth of ice is inhibited, and thus damages to the cell tissue due to the growth of the crystal of ice can be inhibited.

The above freezing inhibitor has been used for a long time to inhibit the freezing of, for example, fresh foods derived from agricultural products, fishery products and livestock products, processed foods, frozen foods, frozen breads, feeds, fresh flowers (cut flowers), pollen, algae, physiologically active substances, medical chemicals, and enzymes. In addition, the freeze damage caused by a series of processes such as freezing, preserving, distributing and thawing foods can be eliminated by the freezing inhibitor, and technical improvements are being studied day by day. Further, as consumer needs change, freezing inhibition technique is required more than ever in various products using aqueous liquids such as paints, medicines, and cosmetics as media.

The above freezing damage is a phenomenon multiply involving various factors, and it is a phenomenon of food deterioration which is caused by: (1) drying of the tissue due to sublimation of ice below the freezing point, called "freeze-burn", and air contact (oxidation) in the void after the sublimation of the ice; (2) localization of the unfrozen water; (3) tissue destruction due to the localization of the ice (crystal growth of the ice and recrystallization of the ice); and (4) outflow of ingredients to drip during thawing.

That is, in the freezing damage, tissue degeneration (sponge formation) occurs in a protein along with the sublimation of ice, and water or ice resulting therefrom is localized. Due to the localization, a drip occurs during thawing. In lipids, an increase in free fatty acids due to hydrolysis or denaturation due to air oxidation occurs, and in saccharides, starch aging develops. As a result, loss in nutrients occurs due to the degeneration caused by oxidation or due to the outflow of ingredients to drip during thawing. In addition, the taste, texture, flavor and the like of the food are significantly deteriorated so that the commercial value is substantially lowered.

Further, the freezing inhibition technique has been used for a long time in protection during low-temperature preservation or cryopreservation of sperm or fertilized eggs for livestock and fishery industries such as pigs, cows, horses, chickens, salmon and herring. Particularly in recent years, due to the rapid progress of technology in the life science field, the freezing inhibition technique for living cells, living tissues, and organs are attracting attention, and it is urgent to develop new technologies concerning low-temperature preservation and freezing preservation such as protection of cells during transplantation of human organs, protection of sperm, eggs, and umbilical cord blood, protection of blood components from autologous blood, protection of tissues for cell transplantation and regenerative medicine, and protection of cells and sperm of rare wild animals and plants and laboratory animals.

In addition, the technique to inhibit the freezing of water is hoped for in many fields. Freezing, frosting and icing countermeasures for windows, keys, and roofs of general dwellings and public facilities are still important issues. High efficiency operation owing to the freezing inhibition technique of heat exchangers, freezer, refrigerators, latent heat storage materials for ice thermal storage systems, and solar photovoltaic power generation equipment is one of the urgent issues from the viewpoint of energy saving.

In addition, in recent years, technological innovation of high-speed operation and precision control of aircrafts, railways, and automobiles is seen. However, from the viewpoint of safe operation, freezing, frosting and icing countermeasures are still important technical issues. Further, freezing, frosting and icing countermeasures for paved roads and bridge roads, ice mass falling from high-rise buildings, bridges, transmission lines, rotating blades of wind power generation equipment, and outdoor facilities with traffic signs, traffic lights, antennas, radars, cameras and sensors also obtain increasing importance from the viewpoint of stable control and security.

As the substance having the freezing inhibiting effect, antifreeze proteins, polysaccharides, essential oil extracts, and the like derived from fish, plants, beetle larvae, insects, mushrooms, molds, lichens or bacteria which inhabit polar regions are known. For example, body fluids of general fish freeze at about -0.8°C, whereas body fluids of fish having an antifreeze protein in the body do not freeze even at -2°C or lower. Since seawater freezes at about -1.9°C, fish having an antifreeze protein in the body can live without freezing body fluids.

However, it is not easy to ensure the quantity on the commercial scale of the animals, plants, insects, mushrooms, molds, lichens, and bacteria which inhabit polar regions as mentioned above, and extraction operation of specific components derived from the same is very complicated and purification of the same requires a great deal of labor, so it is unsuitable for mass production. In addition, there are various problems, such as the case in which it is impossible to practically obtain it at a low price, the case in which it has a specific odor, the case in which the handling it is complicated, or the case in which application to foods is avoided due to the image of the raw material,.

As a measure to solve these problems, the following techniques have been proposed.

For example, Patent Document 1 exemplifies that raffinose, one of oligosaccharides contained in sugar beet, is produced as a substance protecting its own cells from freezing at a very low temperature, and particularly alkyl ether derivatives of the raffinose have a very strong antifreeze effect.

In addition, Patent Document 2 exemplifies that polyacrylamide, which is a non-protein and synthetic polymer, shows thermal hysteresis and has an antifreeze protein-like function.

Further, Patent Document 3 exemplifies a technique of controlling changes in texture and tissue damage on the outer surface of frozen foods. In the technique, sodium carboxymethyl cellulose, which is commonly used as a food additive, is dissolved in water inside foods, and inhibits the crystal growth of ice and inhibit local water separation.

BACKGROUND ART DOCUMENTs

PATENT DOCUMENTS

Patent Document 1: JP-A-2004-285137
Patent Document 2: JP-A-2005-126533
Patent Document 3: JP-A-H06-277022

SUMMARY OF THE INVENTION

PROBLEMS THAT THE INVENTION IS TO SOLVE

However, the raffinose, which is one of the oligosaccharides contained in the sugar beet described in Patent Document 1, is not easy to ensure a quantity on a commercial scale, and there is a concern of difficulties in mass production.

In addition, since the polyacrylamide described in Patent Document 2 is not a natural raw material, there is a concern that it may affect the environment and ecosystem.

Further, the sodium carboxymethyl cellulose described in Patent Document 3 has a weak freezing inhibiting effect.

In view of the above problems, the object of the present invention is to provide a freezing inhibitor, which is excellent in freezing inhibiting effect, excellent in safety, and capable of being mass-produced.

MEANS TO SOLVE THE PROBLEMS

The freezing inhibitor of the invention includes a water-insoluble fiber containing at least one selected from the group consisting of a cellulose, a chitin, and a chitosan.

In the freezing inhibitor described above, a surface of the water-insoluble fiber is chemically modified.

In the freezing inhibitor described above, a number average fiber diameter of the water-insoluble fiber is preferably 1 $\mu$m or less, more preferably 1 nm to 10 nm.

In the freezing inhibitor described above, the water-insoluble fiber is a water-insoluble fiber and/or a salt thereof whose surface is chemically modified with an anionic substituent.

In the freezing inhibitor described above, the anionic substituent is at least one selected from the group consisting of a carboxyl group, a carboxymethyl group, and a phosphate group.

In the freezing inhibitor described above, the salt of the water-insoluble fiber is a neutralized salt with a cation derived from at least one selected from the group consisting of an alkali metal, an alkaline earth metal, and a nitrogen-containing compound.

The freezing inhibitor described above can be made into a freezing inhibition coating film.

A method for manufacturing the freezing inhibition coating film of the invention include a step of volatilizing an aqueous dispersion medium from an aqueous dispersion in which the freezing inhibitor is dispersed in the aqueous dispersion medium to manufacture a freezing inhibition coating film.

ADVANTAGES OF THE INVENTION

Since the freezing inhibitor according to the present invention is obtained from a natural raw material having excellent freezing inhibiting effect and good biodegradability, it is environment-friendly and mass-produced.

BRIEF DESCRIPTION OF DRAWINGS

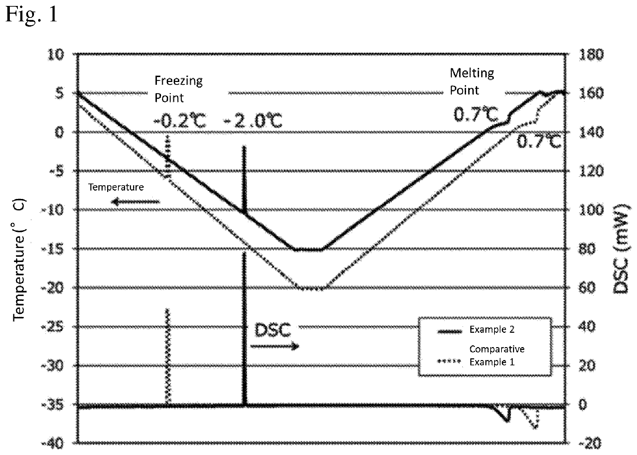

Fig. 1 is a graph schematically showing results of differential scanning calorimetry (DSC measurement) of freezing inhibitors according to Example 2 and Comparative Example 1.

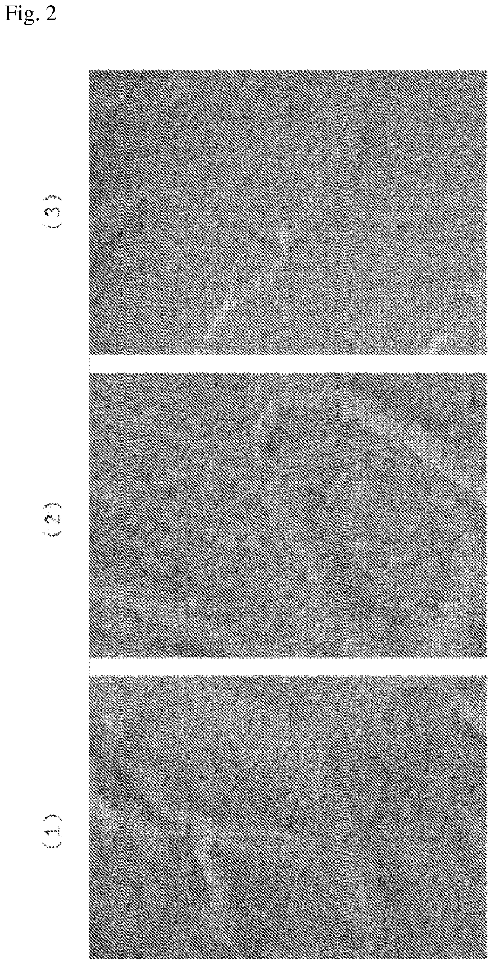

Fig. 2 shows photographs showing a change in time course in the surface of an aluminum foil, which was cooled sufficiently below the freezing temperature of water, when an oxidized cellulose aqueous dispersion obtained in Manufacturing Example 1 and distilled water are sprayed thereto in Example 11 and Comparative Example 2, respectively. Photograph (1) shows the surface of the aluminum foil 2 minutes after spraying an aqueous dispersion of a cellulose fiber (solid content: 0.3 mass%) of Manufacturing Example 1; photograph (2) shows the surface of the aluminum foil 2 minutes after spraying the distilled water; and photograph (3) shows the surface of the aluminum foil 2 minutes after the test (with no water spraying).

MODE FOR CARRYING OUT THE INVENTION

Hereinafter, embodiments of the present invention will be described in detail.

The freezing inhibitor according to the present invention contains a water-insoluble fiber derived from at least one polysaccharide selected from the group consisting of cellulose, chitin, and chitosan. The surface of the water-insoluble fiber may be chemically modified. Specifically, a nonionic group, an anionic group, a cationic group, or an amphoteric group may be introduced into the polysaccharide. A dispersion mainly containing the water-insoluble fiber, a concentrated gel of the dispersion, and a dried coating film of the dispersion are also included in the present invention.

A cellulose, a chitin, or a chitosan, or a fibrous substance, in which a nonionic group, an anionic group, a cationic group, or an amphoteric group is introduced into the cellulose, the chitin, or the chitosan, can be obtained by a usual method, and commercially available one can also be used. By insolubilizing these fibrous substances using, for example, a dispersing machine excellent in beating property and disintegration property, insoluble fibers suitably used in the present invention can be obtained.

The number average fiber diameter of the above water-insoluble fiber is not particularly limited, and is preferably 1 $\mu$m or less, more preferably 1 nm to 500 nm, still more preferably 2 nm to 150 nm, particularly preferably 2 nm to 100 nm, and most preferably 10 nm or less. That is, it is particularly preferable that the water-insoluble fiber used in the present invention is generally called "nanofiber".

Here, the number average fiber diameter can be measured as follows. That is, an aqueous dispersion of the water-insoluble fiber having a solid fraction of 0.05 mass% to 0.1 mass% is prepared, the aqueous dispersion is cast onto a hydrophilization-treated carbon film-coated grid to be a sample for observation with a transmission electron microscope (TEM). In a case of containing fibers having a large fiber diameter, the scanning electron microscope (SEM) image of the surface thereof cast on glass may be observed. Depending on the size of the constitutive fibers, an observation is conducted with the electron microscope images at any magnifications of 5000 times, 10000 times or 50000 times. On this occasion, an axis of the image width in any of the lengthwise direction and the crosswise direction is simulated on the obtained image, and the sample and the observation conditions (magnification, etc.) are adjusted in such a manner that 20 or more fibers could cross that axis. With that, after the observation images satisfying the requirement are obtained, random two axes in the lengthwise direction and in the crosswise direction per every one image are drawn on the images, and the fiber diameter of the fibers intersecting with the axes is read visually. In that manner, at least three images of nonoverlapping surface parts are photographed through an electron microscope, and the value of the fiber diameter of the fibers intersecting with the two axes is read. (Consequently, there is obtained information of fiber diameters of at least 20 fibers×2×3=120 fibers.) Based on the thus-obtained fiber diameter data, the maximum fiber diameter and the number-average fiber diameter are calculated.

The crystal structure of the above water-insoluble fiber is not particularly limited, and, from the viewpoint of water insolubility, is preferably an I-type crystal structure when the constituent fiber is cellulose. Here, the cellulose constituting the water-insoluble fiber has an I-type crystal structure, and this may be identified, for example, from a diffraction profile obtained by wide-angle X-ray diffraction image, in which there appear typical peaks at two positions near $2\theta = 14°$ to $17°$ and $2\theta = 22°$ to $23°$ in .

As described above, the water-insoluble fiber may be one whose surface is chemically modified. Examples of chemical modification include introduction of a nonionic group, an anionic group, a cationic group, or an amphoteric group. From the viewpoints that an I-type crystal structure can be maintained, and fibrillation can be efficiently performed to obtain a nanometer level fiber diameter, an anion-modified or cation-modified water-insoluble fiber is preferred, and an anion-modified water-insoluble fiber is more preferred. That is, preferred is a water-insoluble fiber obtained by introducing an anionic group or a cationic group into a glucose unit in a cellulose molecule or an N-acetylglucosamine unit or a glucosamine unit in a chitin or chitosan molecule.

The anionic group is not particularly limited, and examples thereof include a carboxylic acid group, a phosphoric acid group, a sulfonic acid group, a sulfuric acid group, or a salt thereof. Any one of the above anionic groups or two or more of the above anionic groups may be contained. In addition, a linking group may be contained between the glucose unit, the N-acetylglucosamine unit, or the glucosamine unit and the above anionic group.

The salt of the anionic group is not particularly limited, and examples thereof include: alkali metal salts such as a sodium salt, a potassium salt and a lithium salt; alkaline earth metal salts such as a magnesium salt, a calcium salt and a barium salt; onium salts such as an ammonium salt and a phosphonium salt; amine salts such as primary amines, secondary amines, and tertiary amines; or the like.

As described above, the anionic group includes an acid type such as a carboxylic acid group, a phosphoric acid group, a sulfonic acid group and a sulfuric acid group, and a salt type such as a carboxylate group, a phosphate group, a sulfonate group and sulfate group. A preferred embodiment is to include a salt type anionic group. A water-insoluble fiber having only a salt type anionic group may be used, or a water-insoluble fiber in which a salt type anionic group and an acid type anionic group are mixed may be used.

The cationic group is not particularly limited, and examples thereof include: a quaternary ammonium salt, a primary, secondary or tertiary amino group, or a group for which a hydrochloric acid, an acetic acid or the like forms a salt with the above. Any one of the above cationic groups or two or more of the above cationic groups may be contained. In addition, a linking group may be contained between the glucose unit, the N-acetylglucosamine unit, or the glucosamine unit and the above cationic group.

Hereinafter, an example of an anion-modified water-insoluble fiber, which is one embodiment of the present invention, will be described. An oxidized cellulose (A) obtained by oxidizing a hydroxyl group of a glucose unit constituting a cellulose and a carboxymethylated cellulose (B) obtained by carboxymethylating a hydroxyl group of a glucose unit constituting a cellulose will be described in detail, and examples of each manufacturing method will also be described.

The oxidized cellulose (A) is not particularly limited, and is preferably an oxidized cellulose in which the hydroxyl group at the 6-position of the glucose unit is selectively oxidized. The fact that the oxidized cellulose (A) is an oxidized cellulose in which the hydroxyl group at the 6-position of the glucose unit is selectively oxidized can be confirmed by a $^{13}$C-NMR chart, for example.

The oxidized cellulose (A) may have an aldehyde group or a ketone group together with a carboxylic acid group (COOH) and/or a carboxylate group (COOX, wherein X represents a cation forming a salt with a carboxylic acid). It is preferable that the oxidized cellulose (A) does not substantially have an aldehyde group or a ketone group.

The method for manufacturing the oxidized cellulose (A) is not limited, and the oxidized cellulose (A) can be manufactured by, for example, a manufacturing method including (1) an oxidation reaction step, (2) a reduction step, (3) a purification step, and (4) a dispersion step (pulverization step). Specifically, it is preferable to manufacture the oxidized cellulose (A) by the following steps.

(1) Oxidation Reaction Step

A natural cellulose fiber and an N-oxyl compound are dispersed in water, which is a dispersion medium, and thereafter a co-oxidizing agent is added thereto, to start a reaction. Since the pH drops during the reaction, a 0.5 mol/l aqueous sodium hydroxide solution is added dropwise to keep the pH at 10 to 11. When the change in pH is no longer detected, it is regarded as the end of the reaction.

The natural cellulose generally has a polymerization degree of 1,000 to 3,000, and a degree of crystallinity of 65% to 95%, and has a cellulose type I crystal structure and is composed of crystalline cellulose microfibrils in which 30 to 50 cellulose molecules are bundled. In higher plants, the fiber-like cellulose microfibrils are partially complexed with hemicellulose and lignin on the surface thereof, and form a hierarchical structure of fibers, fiber aggregates, and tissues.

As the above natural cellulose, a purified cellulose isolated from biosynthetic systems of cellulose such as plants, animals, and bacteria-producing gels can be used. More specifically, wood pulps such as coniferous pulps and hardwood pulps, cotton pulps such as cotton linter and cotton lint, non-wood pulps such as wheat straw pulps and bagasse pulps are all suitably used. A bacterial cellulose (BC), a cellulose isolated from saga, a cellulose isolated from seaweed and the like can also be used. These natural celluloses may be used alone, or may be used in combination of two or more thereof.

As described above, since the natural cellulose is partially complexed with hemicellulose and lignin in plant tissues, these components may remain in the natural cellulose regardless of the presence or absence of the purification step. However, it is acceptable for the components to be contained in the natural cellulose raw material to the extent not impeding the freezing inhibiting effect of the present invention.

In addition, examples of the N-oxyl compound include a compound having a nitroxy radical, which is generally used as an oxidation catalyst. The N-oxyl compound is preferably a water-soluble compound. Of these, a piperidine nitroxy radical is preferred, and still more preferred is a 2,2,6,6-tetramethylpiperidinooxy radical (TEMPO radical) or a 4-acetamide-TEMPO radical.

The amount of the N-oxyl compound to be added is a so-called catalytic amount, and is, for example, about 0.1 mmol/l to 4 mmol/l.

The above co-oxidizing agent is not a substance that directly oxidizes hydroxyl groups of the cellulose but is a substance that oxidizes the N-oxyl compound used as an oxidation catalyst.

Examples of the co-oxidizing agent include a hypohalous acid, a halogenous acid, a perhalic acid, a hydrogen peroxide, a perorganic acid, or a salt thereof. The co-oxidizing agent may be used alone, or may be used in combination of two or more thereof. Of these, an alkali metal hypohalite such as sodium hypochlorite or sodium hypobromite is preferred. In case of using sodium hypochlorite, it is preferable to proceed the reaction in the presence of an alkali metal bromide such as sodium bromide from the viewpoint of reaction speed.

The pH of the aqueous reaction solution in the oxidation reaction is preferably maintained within a range of about 8 to 11. The temperature of the aqueous solution is any temperature within a range of about 4°C to 40°C, and temperature control is not particularly necessary. The oxidized cellulose (A) having a desired carboxyl group content can be obtained by controlling the degree of oxidation with the amount of the co-oxidizing agent to be added and the reaction time. Generally, the reaction time may be about 5 minutes to 120 minutes and is completed within at most 240 minutes.

(2) Reduction Step

The oxidized cellulose (A) obtained above is preferably subjected to a reduction reaction after the oxidation reaction. Accordingly, a part or all of the aldehyde group and the ketone group formed by the oxidation reaction can be reduced and returned to a hydroxyl group. Specifically, the oxidized cellulose after the oxidation reaction is dispersed in purified water, the pH of the aqueous dispersion is adjusted to about 10, and the reduction reaction is carried out with various reducing agents.

Commonly used reducing agents including, for example, $LiBH_4$, $NaBH_3CN$, and $NaBH_4$, can be used. The mixing amount of the reducing agent is preferably 0.1 mass% to 4 mass% based on the oxidized cellulose.

The reaction is carried out at room temperature or a temperature slightly higher than room temperature, usually for about 10 minutes to 10 hours, and preferably about 30 minutes to 2 hours.

After completion of the reaction, the pH of the reaction mixture is adjusted to about 2 with various acids, and then the mixture is processed for solid-liquid separation with a centrifuge while purified water is sprinkled thereover, thereby giving a cake-like oxidized cellulose.

(3) Purification Step

Since the oxidized cellulose, which went through the above reduction step, is not usually dispersed discretely to nanofiber units at this stage, the product is formed into a dispersion containing oxidized cellulose of high purity (99 mass% or more) and water, according to an ordinary purification method, namely, according to a process of repeated washing with water and filtration, and the unreacted co-oxidizing agent (hypochlorous acid) and various by-products are removed.

In the purification method in the purification step, any apparatus can be used as long as it is an apparatus capable of attaining the above-mentioned object, as in a method using centrifugal dewatering (for example, continuous decanter).

(4) Dispersion Step (pulverization Treatment Step)

Oxidized cellulose (aqueous dispersion) impregnated with water obtained in the purification step is dispersed in a dispersion medium to carry out a dispersion treatment. Along with the treatment, the viscosity increases, and a dispersion of pulverization-treated oxidized cellulose nanofibers can be obtained.

As a dispersing machine for use in the dispersion step, devices that is powerful, excellent in beating property and disaggregating property, for example, a homo-mixer under high speed rotation, a high pressure homogenizer, an ultrasonic dispersion treatment machine, a beater, a disk type refiner, a conical type refiner, a double disk type refiner, and a grinder can be used.

The dispersion step can be commonly applied as a step of fibrillating cellulose, chitin, or chitosan or a fibrous substance, in which a nonionic group, an anionic group, a cationic group, or an amphoteric group is introduced into cellulose, chitin, or chitosan, to obtain a nanofiber, among the steps of manufacturing the freezing inhibitor according to the present invention.

Next, the method for manufacturing the carboxymethylated cellulose (B) is also not limited, and the carboxymethylated cellulose (B) can be manufactured by, for example, the following method using the natural cellulose as a raw material.

That is, first, a lower alcohol is added as a solvent to the natural cellulose. Specifically, a mixed solvent of one or more of a lower alcohol such as methanol, ethanol, n-propanol and isopropanol with water is preferably used. The mixing ratio of the lower alcohol in the mixed solvent with water is preferably 60 mass% to 95 mass%. The amount of the solvent to be added is preferably 3 to 20 times the mass of the natural cellulose.

Then, mercerization treatment is performed by mixing a cellulose and a solvent with a mercerizing agent in an amount of 0.5 to 20 times by mole per glucose residue of cellulose. Examples of the mercerizing agent include an alkali metal hydroxide, and specifically, sodium hydroxide or potassium hydroxide can be used. The reaction temperature at this time is preferably about 0°C to 70°C, and more preferably about 10°C to 60°C, and the reaction time is preferably about 15 minutes to 8 hours, and more preferably about 30 minutes to 7 hours.

Thereafter, an etherification reaction is performed by adding a carboxymethylating agent in an amount of 0.05 to 10 times mole per glucose residue. Commonly used carboxymethylating agents including, for example, sodium monochloroacetate, can be used. The reaction temperature at this time is preferably about 30°C to 90°C, and more preferably about 40°C to 80°C, and the reaction time is preferably about 30 minutes to 10 hours, and more preferably about 1 hour to 4 hours.

After the above etherification reaction, nanofibers of the carboxymethylated cellulose (B) can be obtained by fibrillating treatment with a high-pressure homogenizer or the like.

Next, a method for manufacturing the anion-modified cellulose (C) having a phosphate group or a salt thereof as an anionic group, which is one embodiment of the present invention, will be described.

That is, the manufacturing method is not limited, and, for example, a method in which a powder or an aqueous solution of a phosphoric acid or a phosphoric acid derivative is mixed with a natural cellulose raw material in a dry state or in a wet state, a method in which an aqueous solution of phosphoric acid or a phosphoric acid derivative is added to a dispersion of a natural cellulose raw material, or the like can be used.

In these methods, generally, a powder or an aqueous solution of a phosphoric acid or a phosphoric acid derivative is mixed or added, and then dehydration treatment, heat treatment or the like follow. Accordingly, a phosphate group-containing compound or a salt thereof is subject to a dehydration reaction with a hydroxyl group of a glucose unit constituting cellulose to form a phosphate ester, and a phosphate group or a salt thereof is introduced.

Here, examples of the phosphoric acid or phosphoric acid derivative include at least one compound selected from an oxo acid, a polyoxo acid or a derivative thereof, containing a phosphorus atom.

The amount of the anionic group in the anion-modified cellulose is not particularly limited and may be, for example, 0.05 mmol/g to 3.0 mmol/g, or 0.1 mmol/g to 2.5 mmol/g.

Here, the amount of the anionic group can be determined by the following method. That is, dry weight of an anion-modified cellulose sample is precisely weighed, and 60 ml of 0.5 mass% to 1 mass% slurry is prepared from the sample. The pH is adjusted to about 2.5 with a 0.1 mol/l aqueous hydrochloric acid solution. Then a 0.05 mol/l aqueous sodium hydroxide solution is added dropwise to perform the electric conductivity measurement until the pH is about 11. Based on the amount (V) of sodium hydroxide consumed in the neutralization stage of the weak acid in which the change in electric conductivity is moderate, the amount of the anionic group can be obtained according to the following Formula (1).

Formula (1):

Amount of anionic group (mmol/g) = V (ml) × [0.05 (mol/l) / cellulose sample weight (g)]

The water-insoluble fiber, as the essential component of the freezing inhibitor according to the present invention, is preferably applied in a range of 0.001 mass% to 100 mass% as a solid content, and can also be used in a form of a dispersion, a concentrated gel thereof, or a dried coating film thereof. It is preferable that the practical concentration when actually exhibiting the function is 0.05 mass% to 100 mass%.

At this time, the application of the freezing inhibitor according to the present invention is not particularly limited, and the freezing inhibitor can be used by adding the same to agricultural, fishery products, livestock products, various products derived from the above, processed foods, others, biological tissues, physiologically active substances, medical chemicals, enzymes, various products using aqueous liquids such as paints, medicines and cosmetics as media, for the purpose of inhibiting freezing of water.

In addition, because the freezing inhibitor according to the present invention has effects of the freezing inhibition of water on the solid surface, inhibition of ice localization and inhibition of crystal growth of the ice, it can also be applied to solid surfaces that do not desire freezing, frosting or icing.

For example, in one embodiment, in a solvent, which contains water as an essential component and at least one organic solvent, the water-insoluble fiber, which is the essential component of the freezing inhibitor according to the present invention, is dispersed to make a nanofiber dispersion with fluidity, and the nanofiber dispersion is added for use. In addition, after weighing the desired amount, the nanofiber components are uniformly mixed using a mixing device, a kneading device, and a stirring device, if necessary, and the uniform mixture can be added for use. In addition, in the freezing inhibitor according to the present invention, an operation to remove excess liquid component may be performed, or an operation to add lacking liquid component may be performed, if necessary. Further, a desired apparatus and device may be selected as appropriate and the freezing inhibitor according to the present invention may be applied by a brush, a spray or the like.

In another embodiment, in a solvent, which contains water as an essential component and an organic solvent and/or an oil, the water-insoluble fiber, which is the essential component of the freezing inhibitor according to the present invention, is dispersed to make a nanofiber dispersion in solid, semisolid, or gel form, and the nanofiber dispersion body can be added for use.

Further, the nanofiber dispersion of each of the above embodiments can be used as a dried coating film by applying it with a brush, a spray or the like, then drying either by going through an operation of removing the liquid component or by allowing to stand naturally.

It is permissible for the freezing inhibitor according to the present invention to contain a(n) (unreacted) cellulose, a synthetic catalyst residue, a fiber swelling aid, a fibrillating aid, a pH adjuster, a solvent, a humectant, an inorganic salt, an organic acid salt, other types of thickener, other types of gelling agent, a preservatives, an antibacterial agent, surfactants, a leveling agent, a water-soluble polymer, other types of organic and inorganic filler, a colorant, and a flavoring agent in practical use, to the extent not hindering the effect of the present invention.

EXAMPLES

A method for preparing a water-insoluble fiber, preferably a water-insoluble nanofiber, as the essential component of the freezing inhibitor according to the present invention is exemplified as follows. However, the present invention is not limited to these examples. Unless otherwise specifically indicated, the concentration is expressed in mass%, and the mixing ratio and the like are on a mass basis.

(Manufacturing Example 1)

(Oxidized Cellulose Nanofiber)

To 20 g of a coniferous pulp (NBKP) pulverized with a domestic mixer, 1500 ml of water, 2.5 g of sodium bromide, and 0.25 g of a 2,2,6,6-tetramethylpiperidinooxy radical (TEMPO) were added, and the mixture was thoroughly stirred and dispersed. Thereafter, a 13 mass% sodium hypochlorite aqueous solution (co-oxidizing agent) was added, such that the amount of sodium hypochlorite was 6.5 mmol/g per 10 g of the pulp, and the reaction was started. Since the pH drops as the reaction goes, a 0.5 N aqueous sodium hydroxide solution was added dropwise so as to keep the pH at 10 to 11, and the reaction was allowed to proceed for 120 minutes until no change in pH was detected.

After the reaction, 0.1 N hydrochloric acid was added for neutralization, which was then purified by repeating filtration and washing with water to give an anion-modified cellulose fiber, the surface of which was oxidized. Then, pure water was added to the anion-modified cellulose fiber to dilute the mixture to 2 mass%, followed by processing three times with a high pressure homogenizer at a pressure of 140 MPa, to obtain an aqueous dispersion of the anion-modified cellulose nanofibers to be used in the present invention. The obtained anion-modified cellulose nanofiber had a sodium carboxylate group (-COONa) as an anionic group, and had a maximum fiber diameter of 10 nm, a number average fiber diameter of 4 nm, and an anionic group (carboxyl group) amount of 1.83 mmol/g.

(Manufacturing Example 2)

(Carboxymethyl Cellulose Nanofiber)

To 20 g of a coniferous pulp (NBKP) pulverized with a domestic mixer, 160 g of a mixed solvent containing 112 g of isopropyl alcohol (IPA) and 48 g of water was added, and thereafter, 8.8 g of sodium hydroxide was added, stirred and mixed, and then the mixture was stirred at 30°C for 60 minutes. Then, the temperature of the reaction solution was raised to 70°C, and 12 g of sodium monochloroacetate (in terms of active component) was added. After reacting for 1 hour, the reaction product was taken out for neutralization and washed to obtain an anion-modified cellulose fiber having a degree of substitution per glucose unit of 0.05. Thereafter, the anion-modified cellulose fiber was set to have a solid content concentration of 2% and processed five times with a high pressure homogenizer at a pressure of 140 MPa, to obtain an aqueous dispersion of the anion-modified cellulose nanofiber to be used in the present invention having a sodium carboxylate group (-CH$_2$COONa) derived from a carboxymethyl group as an anionic group. The obtained anion-modified cellulose nanofiber had a number average fiber diameter of 25 nm and an anionic group (carboxyl group) amount of 0.30 mmol/g.

(Manufacturing Example 3)

(Cedar Enzyme Treated Cellulose Nanofiber)

A cedar-enzyme-treated cellulose nanofiber (a cellulose nanofiber, which was obtained by subjecting a cedar pulp to an alkaline pulping by a soda anthraquinone method, subjecting the resulting cedar pulp to enzyme treatment and fibrillating by a wet pulverization method), obtained from National Research and Development Corporation, Forestry Research Institute, was diluted to a predetermined concentration and subjected to a test as the aqueous dispersion of cellulose nanofiber according to the present invention.

(Manufacturing Example 4)

(Phosphorylated Cellulose Nanofiber)

20 g of urea, 12 g of a sodium dihydrogenphosphate dihydrate, and 8 g of disodium hydrogenphosphate were dissolved in 20 g of water to prepare a phosphorylating agent. The phosphorylating agent was sprayed to 20 g of a coniferous pulp (NBKP) pulverized with a domestic mixer while stirring the pulp with a kneader to obtain a phosphorylating agent-impregnated pulp. Then, the phosphorylating agent-impregnated pulp was heated for 60 minutes in an air dryer with a damper heated to 140°C to obtain a phosphorylated pulp. Water was added to the obtained phosphorylated pulp to adjust the solid content concentration to 2%. The mixture was stirred and mixed to homogeneously disperse, and the operations of filtration and dehydration was repeated twice to obtain a recovered pulp. Then, water was added to the obtained recovered pulp to adjust the solid content concentration to 2%, and a 1 N aqueous sodium hydroxide solution was gradually added while stirring to obtain a pulp slurry having a pH of 12 to 13. Subsequently, this pulp slurry was filtered and dehydrated, water was further added thereto, and the operations of filtration and dehydration were repeated twice. To the recovered phosphorylated pulp obtained by this series of operations, water was added to obtain an aqueous dispersion having a solid content concentration of 2%, and the aqueous dispersion was processed three times with a high pressure homogenizer at a pressure of 140 MPa, so as to obtain an aqueous dispersion of the anion-modified cellulose nanofibers to be used in the present invention. The obtained anion-modified cellulose nanofiber had a sodium phosphate group (-PO$_4$Na$_2$) as an anionic group and had a number average fiber diameter of 5 nm.

(Manufacturing Example 5)

(Chitin Nanofiber Derived from Shrimp Shell)

A shell of black tiger (20 g) was added to a 5% KOH aqueous solution and refluxed for 6 hours to remove the protein in the shrimp shell, and the shrimp shell was filtered and recovered, and then thoroughly washed with water until it became neutral. The shrimp shell was stirred with a 7% HCl aqueous solution at room temperature for 2 days to remove ash content in the shrimp shell. Then the shrimp shell was filtered and recovered, and then washed well with water until it became neutral. Subsequently, the recovered shrimp shell was added to a 0.3 mol/l sodium acetate buffer solution of 1.7% sodium chlorite and stirred at 80°C for 6 hours to remove pigment content contained in the shrimp shell, and the shrimp shell was filtered and recovered, and then thoroughly washed with water until it became neutral. The recovered shrimp shell was dispersed in water, the dispersion was pulverized with a domestic mixer, and the shrimp shell was fibrillated with a stone-mill type grinding machine, to obtain an aqueous dispersion of the chitin nanofiber. Further, water was added to the obtained aqueous dispersion of the chitin nanofiber to obtain an aqueous dispersion having a solid content concentration of 1%, and the aqueous dispersion was processed once with a pressure of 140 MPa using a high-pressure homogenizer. The obtained chitin nanofiber had a number average fiber diameter of 18 nm.

(Manufacturing Example 6)

(Chitosan Nanofiber Derived from Shrimp Shell)

A shell of black tiger (20 g) was added to a 5% KOH aqueous solution and refluxed for 6 hours to remove the protein in the shrimp shell, and the shrimp shell was filtered and recovered, and then thoroughly washed with water until it became neutral. The shrimp shell was stirred with a 7% HCl aqueous solution at room temperature for 2 days to remove ash content in the shrimp shell, and then the shrimp shell was filtered and recovered, and then washed well with water until it became neutral. Subsequently, the recovered shrimp shell was added to a 0.3 mol/l sodium acetate buffer solution of 1.7% sodium chlorite and stirred at 80°C for 6 hours to remove pigment content contained in the shrimp shell, and the shrimp shell was filtered and recovered, and then thoroughly washed with water until it became neutral. 40% sodium hydroxide was added to the shrimp shell whose protein, ash content, pigment content were removed by the above operations, the mixture was refluxed for 6 hours while constantly blowing nitrogen gas, deacetylation was performed, then the shrimp shell was filtered and recovered, and then thoroughly washed with water until it became neutral. The recovered shrimp shell was dispersed in water, the dispersion was pulverized with a domestic mixer, and the shrimp shell was fibrillated with a stone-mill type grinding machine, to obtain an aqueous dispersion of the chitosan nanofiber. Further, water was added to the obtained aqueous dispersion of the chitosan nanofiber to obtain an aqueous dispersion having a solid content concentration of 1%, and the aqueous dispersion was processed once with a pressure of 140 MPa using a high-pressure homogenizer. The obtained chitosan nanofiber had a degree of substitution of N-acetyl group of 35% (element analysis result) and had a number average fiber diameter of 25 nm.

(Manufacturing Example 7)

(Cellulose Nanocrystal)

10 g of a microcrystalline cellulose having a particle size of 200 $\mu$m was suspended in 200 ml of distilled water in a glass separable flask. The separable flask was placed in an ice bath and concentrated sulfuric acid was gradually added until the final concentration reached 48 mass% while maintaining the temperature in the system at 40°C or lower with stirring. Then, the suspension was transferred to a water bath at 60°C, the stirring was continued for 30 minutes, then the crude product was taken out and centrifuged at 8000 rpm for 10 minutes. Excess sulfuric acid was removed by this centrifugation operation, and an operation including re-suspending the residue in distilled water, centrifugation and addition of distilled water again is repeated to attain washing and resuspension five times. The residue obtained by the above operation was suspended in distilled water, the pH was adjusted to 8, and then the solid content concentration was adjusted to be 5 mass%, to obtain a cellulose nanocrystal slurry. Thereafter, the obtained cellulose nanocrystal slurry was processed once with a pressure of 140 MPa using a high-pressure homogenizer, to obtain an aqueous dispersion of the cellulose nanocrystal. The obtained aqueous dispersion of the cellulose nanocrystal had a number average fiber diameter of 15 nm and a crystal length of about 190 nm.

(Basic Evaluation)

(Examples 1 to 10 and Comparative Example 1)

Water was added to the aqueous dispersion of the oxidized cellulose nanofiber obtained in Manufacturing Example 1 as necessary to adjust the solid content concentration to 1 mass%, 0.5 mass% and 0.1 mass% respectively, to prepare Examples 1 to 3 in order.
In addition, water was added to the aqueous dispersion of the carboxymethyl cellulose nanofiber obtained in Manufacturing Example 2 as necessary to adjust the solid content concentration to 1 mass% and 0.5 mass%, to prepare Examples 4 and 5 in order.

Further, water was added to the aqueous dispersions of the nanofibers obtained in each of Manufacturing Examples 3 to 7 to adjust the solid content concentration to 0.5 mass% respectively, to prepare Examples 6 to 10 in order.

Further, water was added to carboxymethyl cellulose (manufactured by DKS Co. Ltd., trade name "Celogen BSH-12", having a degree of substitution of 0.7), to prepare an aqueous dispersion having a solid content concentration of 0.5 mass% in Comparative Example 1.

To each of the obtained aqueous dispersions of Examples 1 to 10 and Comparative Example 1, AgI (1 mg / 1 ml) to be an ice crystal nucleating agent was added and the mixture was stirred, and then differential scanning calorimetry (DSC measurement) was performed. Based on the results, the freezing initiation temperature ($T_{SC}$) of the sample, the freezing initiation temperature ($T_{SCW}$), the freezing point ($T_F$) and the melting point ($T_M$) of distilled water, the freeze inhibiting activity ($\Delta T_{SC} = T_{SC} - T_{SCW}$) indicating the degree of supercooling of the sample against distilled water, and the thermal hysteresis ($\Delta T = T_M - T_F$) indicating the difference between the freezing point and the melting point of the sample were determined. The measurement results were shown in Table 1 for Examples 1 to 10 and Comparative Example 1. The measurement device and measurement conditions used are as follows.

- Measurement device: Rigaku Thermo plus EVO DSC 8230 type device
- Temperature decrease rate: 0.25°C/min
- Temperature rise rate: 0.25°C/min

[Table 1]

| Sample | | Sample concentration | Freezing initiation temperature $T_{SC}$ | Freezing point $T_F$ | Melting point $T_M$ | Freeze inhibiting activity against distilled water $\Delta T_{SC}$ (= $T_{SC} - T_{SCW}$) | Thermal hysteresis $\Delta T$ (= $T_M - T_F$) |
|---|---|---|---|---|---|---|---|
| | | Mass% | °C | °C | °C | °C | °C |
| | Distilled water | - | -0.6 (Tscw) | -0.2 | 0.6 | - | 0.8 |
| Example 1 | Oxidized cellulose nanofiber | 1 | -11.3 | -2.1 | 0.9 | -5.3 | 3.0 |
| Example 2 | Oxidized cellulose nanofiber | 0.5 | -10.4 | -2.0 | 0.7 | -4.4 | 2.7 |
| Example 3 | | 0.1 | -8.2 | -1.2 | 0.8 | -2.2 | 2.0 |
| Example 4 | Carboxymethyl cellulose nanofiber (DS = 0.05) | 1 | -9.8 | -14 | 0.8 | -3.8 | 2.2 |
| Example 5 | | 0.5 | -9.1 | -1.2 | 0.8 | -3.1 | 2.0 |
| Example 6 | Cedar enzyme treated cellulose nanofiber | 0.5 | -8.8 | -1.1 | 0.8 | -2.8 | 1.9 |
| Example 7 | Phosphorylated cellulose nanofiber | 0.5 | -10.1 | -1.2 | 0.8 | -4.1 | 2.0 |
| Example 8 | Chitin derived nanofiber | 0.5 | -8.1 | -1.2 | 0.7 | -2.1 | 1.9 |
| Example 9 | Chitosan derived nanofiber | 0.5 | -10.2 | -1.2 | 0.8 | -4.2 | 2.0 |
| Example 10 | Cellulose nanocrystal | 0.5 | -9.7 | -1.8 | 0.7 | -3.7 | 2.5 |
| Comparative Example 1 | Carboxymethyl cellulose (DS = 0.7) | 0.5 | -6.1 | -0.2 | 0.7 | -0.1 | 0.9 |

From Table 1, the freezing initiation temperature of the oxidized cellulose nanofibers of Examples 1 to 3 was lower than the freezing initiation temperature of distilled water, and the effect of freezing inhibition on distilled water, that is, the degree of supercooling, was -2.2°C to -5.3°C in the concentration range of 0.1 mass% to 1.0 mass% tested.

Similarly, the freezing points of Examples 1 to 3 were -1.2°C to -2.1°C, which was lower than the freezing point of water -0.2 °C under this test condition by 1.0°C or more.

Similar to Examples 1 to 3, in Examples 4 to 10, the freezing initiation temperature of the freezing inhibitor according to the present invention is also lower than the freezing initiation temperature of distilled water, and it was confirmed that each of the freezing inhibitor had an excellent freezing inhibition effect. The freezing point was in the range of -1.1°C to -1.8°C, which was lower than the freezing point of water under this test condition.

Further, in any of the systems of Examples 1 to 10, the thermal hysteresis ($\Delta$T) defined as the temperature difference (= $T_M$ - $T_F$) between the freezing point ($T_F$) and the melting point ($T_M$) in the present evaluation performed by the DSC measurement is observed. Together with the above results, it is believed that antifreeze protein-like effect known to exhibit antifreeze activity is obtained.

In the Comparative Example 1, carboxymethyl cellulose that is neither water-insoluble nor fibrous was used, and it was a test sample having a mode substantially different from that of the present invention. In the Comparative Example 1, the freezing temperature had no significant difference from the freezing initiation temperature of the distilled water, and as compared with Examples 1 to 10 mainly containing water-insoluble nanofibers having the same carboxyl group, the freezing inhibition effect was smaller. In addition, the thermal hysteresis was smaller than those of Examples 1 to 10.

Here, for the purpose of explaining the DSC measurement results, Fig. 1 is a graph schematically showing DSC measurement results of Example 2 and Comparative Example 1. In this evaluation, the DSC exothermic peaks appear from a supercooled state in both Example 2 and Comparative Example 1 at a temperature decease rate of 0.25°C/min. The freezing point ($T_F$) is observed at -2.0°C in Example 2 and -0. 2°C in Comparative Example 1, confirming that water is freezing. In addition, DSC endothermic peaks appear in both Example 2 and Comparative Example 1 at a temperature rise rate of 0.25°C/min. 0.7°C is observed as the melting point ($T_M$), confirming that ice melts at the temperature.

(Application Evaluation)

1. Confirmation test of ice crystal growth on aluminum foil

(Examples 11 to 14 and Comparative Example 2)

Distilled water was added to the aqueous dispersions of the nanofibers obtained in Manufacturing Examples 1, 2, 4, and 7 with stirring, to prepare aqueous dispersions for Examples 11 to 14 in order, each having a solid content of 0.3 mass%, for the following tests. Distilled water was similarly tested in Comparative Example 2.

200 ml of liquid nitrogen was poured into a 300 ml stainless steel container wrapped with an aluminum foil and covered with a stainless steel lid and allowed to stand for 2 minutes to confirm that the surface of the aluminum foil had sufficiently cooled to the freezing point of water or lower. Then, an aqueous dispersion of the nanofiber having a solid content of 0.3 mass% and distilled water were respectively sprayed onto the surface of the aluminum foil using a commercially available trigger type spray bottle. The growth state of the ice crystals on the surface of the aluminum foil was observed over time, to perform evaluation according to the following evaluation criteria. The results were shown in Table 2 for Examples 11 to 14 and Comparative Example 2.

Evaluation criteria (ice crystal growth evaluation):

A: only small ice crystals less than 2 mm in diameter are observed almost uniformly on the whole surface of the aluminum foil

B: growth of ice crystals is observed in places, but less than 2 mm in diameter

C: frost-like crystals of 2 mm or more in diameter are scattered due to the growth of ice crystals

D: frost-like crystals of 2 mm or more in diameter are observed in the whole surface

[Table 2]

| | Sample | Spray concentration | Ice crystal growth evaluation | | | |
|---|---|---|---|---|---|---|
| | | Mass% | After 2 minutes | After 5 minutes | After 15 minutes | Observation |
| Example 11 | Oxidized cellulose nanofiber | 0.3 | A*1 | B | D | 5 to 10 minutes after stat of test, ice crystals on some parts start to gradually grow into frost-like crystals. |
| Example 12 | Carboxymethyl cellulose nanofiber (DS = 0.05) | 0.3 | A | C | D | 5 minutes after stat of test, ice crystals on some parts start to grow into frost-like crystals. |
| Example 13 | Phosphorylated cellulose nanofiber | 0.3 | A | B | D | 5 to 10 minutes after stat of test, ice crystals on some parts start to grow into frost-like crystals. |
| Example 14 | Cellulose nanocrystal | 0.3 | A | B | D | 5 to 10 minutes after stat of test, ice crystals on some parts start to grow into frost-like crystals. |
| Comparative Example 2 | Distilled water | - | D*2 | D | D | immediately after spraying distilled water, ice crystals rapidly grow into frost-like crystals, and after 2 minutes, frost-like crystals of 3 mm to 5 mm (some are larger than 5 mm) in size are observed on entire surface. |

*1: Photograph (1)
*2: Photograph (2)

In Examples 11 to 14, small ice crystals of about 1 mm in diameter gradually appeared gradually from 1 minute after the start of the test, but the subsequent growth of ice crystals was slow, and the ice crystals remained below 2 mm in diameter even 2 minutes after the start of the test. In Comparative Example 2, ice crystals began to grow rapidly in a frost shape immediately after the distilled water was sprayed, and the frost-like crystals of 3 mm to 5 mm were observed on the entire surface 2 minutes after the start of the test. Observation of the surface 2 minutes after the start of the test showed a clear difference in the mode of ice crystals due to the presence or absence of nanofibers in the sample. As can be seen from the photographs (1) to (3) shown in Fig. 2, the effect of inhibiting ice crystal growth by the nanofibers was clear.

Thereafter, the growth of ice crystals was observed in some parts in all of Examples 11 to 14, and the effect of inhibiting ice crystal growth by the nanofibers was clearer as compared with Comparative Example 2 even after 5 minutes from the start of the test. After 15 minutes from the start of the test, the surfaces were covered with coarse frost-like crystals in all of the systems of Examples 11 to 14 and Comparative Example 2, and there was no visual difference.

2. Confirmation test of ice crystal growth in transparent jelly

(Examples 15 to 17 and Comparative Examples 3 and 4)

Distilled water was added to the aqueous dispersions of the nanofibers obtained in Manufacturing Examples 1, 2, and 6 with stirring, to prepare aqueous dispersions each having a solid content of 1 mass%, and jelly preparations were prepared for Examples 15 to 17 in order, according to the following recipe, for tests. By using distilled water (Comparative Example 3) and an aqueous dispersion prepared to have a solid content concentration of 1 mass% by adding water to carboxymethyl cellulose (manufactured by DKS Co. Ltd., trade name "Celogen BSH-12", having a degree of substitution of 0.7) (Comparative Example 4), jelly preparations were prepared according to the following recipe, for tests.

Water (30 g) (tap water (1) in Table 3) was added to a cup, 3 g of gelatin was added thereto, and the mixture was gently stirred and then allowed to stand for 15 minutes. Then, 30 g of sugar was added, and the mixture was heated in a microwave oven for 1 minute, and thoroughly stirred until the gelatin and sugar were uniform. Subsequently, 60 g of 1% aqueous dispersion of the nanofiber (Examples 15 to 17) was added, and 140 g of water (tap water (2) in Table 3) was further added thereto, and the mixture was sufficiently stirred until the whole became uniform. A commercially available jelly formwork (2 for each) was provided, and a predetermined amount of jelly preparation was poured thereto, and then cooled in a refrigerator for about 3 hours to prepare a jelly. Comparative Example 3 was a standard recipe of transparent jelly, which was prepared in the same manner except that the equivalent amount of 1% aqueous dispersion of the nanofiber was replaced with water and 200 g of water (tap water (2) in Table 3) was added in the same manner as the remainder.

[Table 3]

| Mixing component | Examples 15 to 17 | Comparative Example 3 | Comparative Example 4 |
|---|---|---|---|
| Gelatin | 3 parts | 3 parts | 3 parts |
| Tap water (1) | 30 parts | 30 parts | 30 parts |
| Sugar | 30 parts | 30 parts | 30 parts |
| Tap water (2) | 140 parts | 200 parts | 140 parts |
| 1% aqueous dispersion of nanofiber | 60 parts | - | - |
| 1% aqueous dispersion of carboxymethyl cellulose | - | - | 60 parts |
| Total | 263 parts | 263 parts | 263 parts |

Then, in order to confirm the moldability and appearance of the jelly, one jelly for each was taken out from the refrigerator, the jelly was taken out on a glass petri dish, observed visually, and the formability and transparency were evaluated according to the following evaluation criteria. The results were shown in Table 4.

Evaluation criteria (moldability of jelly):

A: the shape retention of the jelly is kept even being taken out from the formwork

B: the jelly collapsed when separated from the formwork, and separation and flatness are seen

C: the shape of the jelly collapses and the shape retention is not recognized when taken out from the formwork

Evaluation criteria (transparency of jelly):

A: the jelly taken out from the formwork is transparent as a whole, and is uniform without separation of water and components

B: the jelly taken out from the formwork has partially opaque parts and uneven parts due to separation of water and components

C: the jelly taken out from the formwork has turbidity on the whole, and separation of water and components

Next, in order to evaluate the state of ice crystal growth after the jelly frozen, each jelly prepared by the above operation was transferred from a refrigerator to a commercial freezer set at -20°C and allowed to stand for one week. After one week, the jelly was taken out from the freezer, transferred to a chilled refrigerator and allowed to stand for 3 hours. Thereafter, the jelly was taken out and placed onto a glass petri dish. Then the jelly was carefully cut with a kitchen knife equally and placed in a thermostatic chamber at 25°C. The mode of freezing (ice crystals) in the central part of the jelly was visually observed after 15 minutes and after 45 minutes. Thereby, evaluation was performed according to the following evaluation criteria for the mode. The results were shown in Table 4.

Evaluation criteria (ice crystal growth evaluation of jelly):

A: the whole jelly is transparent
B: a slight turbidity is seen in the center of the jelly, but the whole is transparent
C: around the jelly is transparent, but a frozen (ice crystal) part remains in the center of the jelly
D: frozen (ice crystal) part remains over the whole jelly, or water separation and components separation occur and uneven

[Table 4]

| | Sample | Moldability of jelly | Transparency of jelly | Ice crystal growth evaluation | |
|---|---|---|---|---|---|
| | | | | After 15 minutes | After 45 minutes |
| Example 15 | Oxidized cellulose nanofiber | B | B | B | A |
| Example 16 | Carboxymethyl cellulose nanofiber (DS = 0.05) | B | B | B | B |
| Example 17 | Chitosan nanofiber | B | B | B | B |
| Comparative Example 3 | Distilled water | B | B | D | C |
| Comparative Example 4 | Carboxymethyl cellulose (DS = 0.7) | B | B | C | C |

In Examples 15 to 17, the moldability (shape retention) and transparency of the jelly were not different from the standard formulation (Comparative Example 3), and a transparent jelly could be prepared satisfactorily. As for the mode of freezing (ice crystal growth) of the jelly after thawing from freezing preservation, in Examples 15 to 17, the jelly had higher transparency than the standard formulation (Comparative Example 3), and no water separation or unevenness inside the jelly was observed.

In addition, the ice crystal growth inhibiting effect of Example 16 using the water-insoluble fibrous carboxymethyl cellulose nanofiber was clearer as compared with Comparative Example 4 using carboxyl methylcellulose, which is neither water-insoluble nor fibrous.

From these results, the transparent jelly using the freezing inhibitor according to the present invention can be available in frozen distribution and freezing preservation, and the appearance such as shape retention and transparency is improved as compared with the conventional products even when thawed, so that it can contribute to enhancing the commercial value in business.

As described above, it is clear that the freezing inhibitor according to the present invention exhibits a specific freezing inhibition effect and exhibits a larger thermal hysteresis, which is a characteristic of the freezing inhibitor according to the present invention.

INDUSTRIAL APPLICABILITY

The freezing inhibitor according to the present invention can be suitably used in the following products, which may be handled in freezing distribution or freezing preservation. Specific examples include rice, bread, rice cake, dumplings, paste products, tofu, yuba, boiled eggs, meat products, ham, sausages, vegetables, fruits, cut vegetables, cut fruits, fish and shellfish, dried fish, boiled whitebait, fish eggs, or the like. Other examples include frozen foods such as frozen meat, frozen seafood, frozen dough, frozen noodles, frozen rice, frozen vegetables, frozen fruits, meat fries, cutlets, tempura, Chinese bun, dumplings, Chinese steamed dumplings, spring rolls, Chinese potatoes, French fries, pies, and pizzas. Yet other examples include frozen pudding, frozen jelly, agar, ice cream, frozen dessert, pickles, liquid seasoning, sauces, dressings, freeze-dry foods, fresh flowers (cut flowers), or the like.

The freezing inhibitor according to the present invention exhibits the effect of inhibiting freezing, frosting and icing due to due to inhibition of water or ice localization and inhibition of crystal growth of the ice on the solid surface, and can be applied as freezing, frosting, icing inhibitor for windows, keys, roofs of general residential and public facilities, or heat exchangers such as refrigerators, or operation control equipment and windows of aircraft, railroads, and automobiles, or paved roads, bridge roads, high-rise buildings, bridges, transmission lines, or outdoor facilities with traffic lights, antennas, radars, cameras, and sensors.

The freezing inhibiting effect in the present invention can also be applied to various products using aqueous liquid as a medium such as paints, medicines and cosmetics, living cells, living tissues, organs, physiologically active substances, and medical chemicals.

**Claims**

1. A freezing inhibitor, comprising a water-insoluble fiber containing at least one selected from the group consisting of a cellulose, a chitin, and a chitosan.

2. The freezing inhibitor according to claim 1, wherein a surface of the water-insoluble fiber is chemically modified.

3. The freezing inhibitor according to claim 1 or 2, wherein a number average fiber diameter of the water-insoluble fiber is 1 $\mu$m or less.

4. The freezing inhibitor according to claim 3, wherein the number average fiber diameter of the water-insoluble fiber is 1 nm to 10 nm.

5. The freezing inhibitor according to any one of claims 2 to 4, wherein the water-insoluble fiber is a water-insoluble fiber and/or a salt thereof whose surface is chemically modified with an anionic substituent.

6. The freezing inhibitor according to claim 4 or 5, wherein the anionic substituent is at least one selected from the group consisting of a carboxyl group, a carboxymethyl group, and a phosphate group.

7. The freezing inhibitor according to claim 5 or 6, wherein the salt of the water-insoluble fiber is a neutralized salt with a cation derived from at least one selected from the group consisting of an alkali metal, an alkaline earth metal, and a nitrogen-containing compound.

8. A freezing inhibition coating film, comprising the freezing inhibitor according to any one of claims 1 to 7.

9. A method for manufacturing a freezing inhibition coating film, comprising a step of volatilizing an aqueous dispersion medium from an aqueous dispersion in which the freezing inhibitor according to any one of claims 1 to 7 is dispersed in the aqueous dispersion medium to manufacture a freezing inhibition coating film.

Fig. 1

Fig. 2

## INTERNATIONAL SEARCH REPORT

| International application No. |
|---|
| PCT/JP2017/030914 |

**A.  CLASSIFICATION OF SUBJECT MATTER**
*C09K3/00*(2006.01)i, *A23L29/00*(2016.01)i

According to International Patent Classification (IPC) or to both national classification and IPC

**B.  FIELDS SEARCHED**

Minimum documentation searched (classification system followed by classification symbols)
C09K3/00, A23L3/36-54, A23L5/00-30, A23L29/00-10, C09K3/18, C09K5/20, E01H10/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
JSTPlus/JMEDPlus/JST7580(JDreamIII),
CAplus/MEDLINE/EMBASE/BIOSIS/WPIDS/FSTA(STN)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 2001-172615 A  (Kabushiki Kaisha MI Tec),<br>26 June 2001 (26.06.2001),<br>claims; examples<br>(Family: none) | 1-2,8-9<br>3-4 |
| X<br>Y | JAGANNATH A., et al., Comparative evaluation of bacterial cellulose(nata) as a cryoprotectant and carrier support during the freeze drying process of probiotic lactic acid bacteria, LWT-Food Science and Technology, 2010, Vol.43, p.1197-1203, particularly, paragraphs of 'Abstract', 'Results and discussions' | 1-9<br>3-4 |
| X | JP 2000-160144 A  (Kabushiki Kaisha MI Tec),<br>13 June 2000 (13.06.2000),<br>claims; examples<br>(Family: none) | 1-2,5-9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    14 September 2017 (14.09.17) | Date of mailing of the international search report<br>    26 September 2017 (26.09.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/030914 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2001-516386 A (Monsanto Co.), 25 September 2001 (25.09.2001), claims & US 5951910 A claims & WO 1998/041592 A1 & EP 966505 A1 | 1-9 |
| X | Yukio NAKAMURA et al., "Effect of Chitin Isolated from Crustaceans and Cephalopods on Denaturation of Fish Myofibrillar Protein and the State of Water during Frozen Storage", Japan Society of Refrigerating and Air Conditioning Engineers Ronbunshu, 1998, vol.15, no.2, pages 125 to 133, particularly, paragraph of '3. Result of Experiment' | 1-2,5-9 |
| Y | | 3-4 |
| Y | JP 2015-193956 A (Osaka Gas Co., Ltd.), 05 November 2015 (05.11.2015), claims; examples (Family: none) | 3-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004285137 A
- JP 2005126533 A
- JP H06277022 A